(19) Europäisches Patentamt
European Patent Office
Office européen des brevets

(11) **EP 2 640 482 B1**

(12) **FASCICULE DE BREVET EUROPEEN**

(45) Date de publication et mention de la délivrance du brevet:
**07.06.2017 Bulletin 2017/23**

(51) Int Cl.:
*A23L 5/30* (2016.01)    *A23N 1/00* (2006.01)
*C02F 1/46* (2006.01)    *B01D 11/02* (2006.01)
*A23L 27/10* (2016.01)    *A23L 33/105* (2016.01)

(21) Numéro de dépôt: **11784702.0**

(22) Date de dépôt: **21.11.2011**

(86) Numéro de dépôt international:
**PCT/EP2011/070597**

(87) Numéro de publication internationale:
**WO 2012/066144 (24.05.2012 Gazette 2012/21)**

(54) **PROCEDE D'EXTRACTION DE MOLECULES D'INTERET A PARTIR DE TOUT OU PARTIE D'UNE MATRICE VEGETALE**

VERFAHREN ZUM EXTRAHIEREN VON ZIELMOLEKÜLEN AUSGEHEND VON EINER PFLANZLICHEN MATRIX ODER TEILEN DAVON

METHOD OF EXTRACTING TARGET MOLECULES STARTING FROM A PLANT MATRIX OR PARTS THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2010 FR 1059547**

(43) Date de publication de la demande:
**25.09.2013 Bulletin 2013/39**

(73) Titulaires:
• **Université Technologie de Compiègne-UTC**
**60203 Compiegne cedex (FR)**
• **Societe Francaise de Laboratoires d'Oenologie Sofralab**
**51530 Magenta (FR)**

(72) Inventeurs:
• **LANOISELLE, Jean-Louis**
**F-60400 Salency (FR)**
• **VOROBIEV, Eugène**
**F-60200 Compiègne (FR)**
• **BOUSSETA, Nadia**
**F-60200 Compiègne (FR)**
• **MANTEAU, Sébastien**
**Boursault 51480 (FR)**
• **LOGEAT, Michel**
**F-58600 Varennes Vauzelles (FR)**

(74) Mandataire: **Regimbeau**
**20, rue de Chazelles**
**75847 Paris Cedex 17 (FR)**

(56) Documents cités:
**WO-A1-2008/034228    US-A1- 2007 003 644**
**US-A1- 2008 279 995**

• **Delsart, C, Mietton Peuchot, M: "Effet des champs électriques pulsés sur l'extraction des polyphénols du raisin", , 20 juin 2010 (2010-06-20), XP002640420, Tbilisi, Georgie Extrait de l'Internet: URL:http://www.oiv2010.ge/POSTER/POST_OE NO LOGY/P.II.46-No%20171%20P%20Delsart%20EF FE CT%20OF%20PULSEDELECT.pdf [extrait le 2011-06-08]**
• **LI, L, LANOISELLE, J-L, DING, L, CLAUSSE, D: "Extraction aqueuse d'huile végétale de tourteaux oléagineux", RECENTS PROGRES EN GENIE DES PROCEDES, vol. 98, 2009, pages 69-1-69-6, XP002640506,**
• **Anonymous: "Scientific Programme", 33rd World Congress of Vine and Wine, Tbilisi, Georgia , 20 juin 2010 (2010-06-20), 25 juin 2010 (2010-06-25), pages 1-15, XP002640515, Extrait de l'Internet: URL:http://www.oiv2010.ge/index.php?page=5 &lang=1 [extrait le 2011-06-08]**

- LOPEZ N ET AL: "Effects of pulsed electric fields on the extraction of phenolic compounds during the fermentation of must of Tempranillo grapes", INNOVATIVE FOOD SCIENCE AND EMERGING TECHNOLOGIES, ELSEVIER, AMSTERDAM, NL, vol. 9, no. 4, 1 October 2008 (2008-10-01) , pages 477-482, XP024338954, ISSN: 1466-8564, DOI: 10.1016/J.IFSET.2007.11.001 [retrieved on 2007-11-24]

- CORRALES ET AL: "Extraction of anthocyanins from grape by-products assisted by ultrasonics, high hydrostatic pressure or pulsed electric fields: A comparison", INNOVATIVE FOOD SCIENCE AND EMERGING TECHNOLOGIES, ELSEVIER, AMSTERDAM, NL, vol. 9, no. 1, 26 November 2007 (2007-11-26), pages 85-91, XP022361834, ISSN: 1466-8564, DOI: 10.1016/J.IFSET.2007.06.002

**Description**

<u>Domaine technique</u>

L'invention concerne le domaine de l'extraction de molécule d'intérêt à partir d'une matrice végétale ou assimilée, et plus particulièrement d'un sous-produit de la vinification tel que du marc de raisin, des lies ou des bourbes.

Le marc de raisin résulte du pressurage des raisins, et comprend notamment des pépins, pellicules, et rafles.

Les lies sont obtenues après fermentation du jus de raisin avec des levures. Il s'agit du dépôt formé après la fermentation et qui continent des levures transformées ou leurs fragments.

Les bourbes quant à elles sont l'ensemble des particules qui ont sédimenté après le pressage.

L'invention trouve donc application dans l'extraction de molécule d'intérêt à partir des pépins, pellicules et rafles, pris individuellement ou en combinaison, de lies ou de bourbes.

L'invention concerne également le domaine d'extraction de molécules d'intérêt à partir de thé (notamment le thé vert), de fèves de cacao, de baies (notamment les baies rouges) d'oléagineux tel que le lin, de pommes, etc.

<u>État de la technique antérieure</u>

Dans ce qui suit, nous décrirons plus particulièrement l'invention dans son application à l'extraction de polyphénols. à partir d'une matrice végétale, notamment du marc de raisin. Ceci n'est cependant aucunement limitatif, dans la mesure où ces molécules peuvent également être extraites des pépins, pellicules, rafles, lies et bourbes, pris individuellement ou en combinaison.

La structure des polyphénols, aussi appelés composés phénoliques, comprend un noyau benzénique avec un ou plusieurs groupement hydroxyles, libres ou engagés avec un substituant tel qu'un alkyle, un ester, ou encore un sucre. La masse moléculaire des polyphénols peut varier de moins de 100 g/mol à plus de 30 000 g/mol.

Les polyphénols présents dans le marc de raisin appartiennent à différents groupes : les dérivés phénoliques simples, les flavonoïdes (flavonols et anthocyanes) et les structures phénoliques plus complexes condensées.

Un procédé conventionnel de récupération des polyphénols à partir de marc de raisin repose sur une extraction solide/liquide par solvant suivie d'une purification et d'un séchage. L'extraction solide/liquide désigne la dissolution sélective d'un ou plusieurs solutés d'une matrice solide dans un solvant liquide. C'est l'une des opérations unitaires les plus anciennes. Cette opération consiste à mettre en contact le solvant liquide avec la matrice solide. Dans le cas de l'extraction de polyphénols, ce contact est effectué par une mise en immersion totale de la matrice solide dans le solvant liquide ou par arrosage/lavage de la matrice solide par le solvant.

En fonction du solvant utilisé, les membranes des cellules composant les pépins, pellicules ou rafles sont plus ou moins fragilisées ce qui facilite la libération des polyphénols des cellules.

De nombreux travaux ont porté sur l'influence de paramètres opératoires de l'extraction solide/liquide des polyphénols. Les principaux paramètres sont la nature du solvant, la température, le temps de contact, le ratio liquide/solide, la taille des particules et le pH.

En ce qui concerne les solvants, le méthanol, l'éthanol, l'acétate d'éthyle et l'eau sont les plus employés concernant l'extraction à partir des pellicules et de marc de raisin en général. Parmi ceux-ci, le méthanol semble être le solvant procurant le meilleur taux d'extraction, suivi de l'éthanol puis de l'eau (Pinelo et al., 2005). En effet, les polyphénols se solubilisent plus facilement dans le méthanol que dans les deux autres solvants. Toutefois, l'éthanol et l'eau sont préférables dans le cas d'une extraction des polyphénols pour une application alimentaire.

En ce qui concerne le ratio liquide/solide, il semble que plus le ratio liquide/solide est élevé, meilleure est l'extraction des polyphénols. Cependant, d'un point de vue économique, l'optimisation de cette variable est nécessaire afin de réduire les coûts du procédé, notamment en réduisant la consommation de solvant liquide.

A l'issue de l'extraction solide/liquide, les extraits obtenus contiennent un grand nombre d'autres composés tels que les sucres, les protéines, les acides aminés, les sels minéraux, etc. C'est pourquoi une purification est effectuée afin de les éliminer. Il existe plusieurs techniques de purification. Les principales techniques utilisées sont l'adsorption-désorption et la filtration.

Suite à cette purification, les extraits purifiés sont séchés afin d'obtenir une poudre de polyphénols. Sous la forme de poudre, le produit est stabilisé.

De nombreuses techniques d'intensification ont également été développées telles que les ultrasons et les puissances pulsées. Ces techniques d'intensification agissent sur les membranes et/ou parois cellulaires des cellules constituant la matrice végétale solide pour faciliter l'extraction de biocomposés tel que les polyphénols.

Deux techniques d'intensification par puissances pulsées existent principalement. Elles utilisent des impulsions électriques pour concentrer, dans des temps très courts, de l'énergie électrique stockée préalablement dans un condensateur. Cette énergie électrique est ensuite injectée dans une chambre de traitement comprenant la matrice végétale solide, par exemple le marc de raisin. Cette injection très brutale d'énergie électrique dans la chambre permet de déséquilibrer des propriétés physiques, biologiques et/ou chimiques des cellules de la matrice végétale solide qui peuvent présenter des caractéristiques très intéressantes pour l'extraction de biocomposés tel que les polyphénols.

Une première technique par puissances pulsées utilise un champ électrique pulsé (technique CEP ou simplement CEP par la suite). Le champ électrique pulsé induit sur une cellule végétale ou animale la formation de pores sur sa membrane : il s'agit du phénomène d'électroporation.

Le champ électrique pulsé peut également agir sur le contenu intracellulaire de la cellule (par exemple détacher la membrane cellulaire de la paroi ainsi que désorganiser son contenu intracellulaire).

La création d'un champ électrique pulsé nécessite un générateur haute-tension et une chambre de traitement comprenant au moins deux électrodes, une étant reliée au générateur et une autre étant reliée à la terre.

La matrice végétale est placée dans la chambre de traitement. Le générateur haute-tension transforme ensuite le courant électrique alternatif en un courant discontinu sous forme d'impulsions. L'énergie de chaque impulsion est temporairement emmagasinée dans un ou plusieurs condensateurs puis déchargée par les électrodes dans la chambre de traitement.

La capacité d'extraction de composés d'intérêt à partir de cellules végétales par CEP dépend de plusieurs paramètres opératoires qui peuvent être classés en deux catégories : les paramètres liés au procédé (amplitude du champ électrique appliqué, durée et nombre d'impulsions, température) et les paramètres liés à la matrice végétale (conductivité).

La deuxième technique par puissances pulsées utilise des décharges électriques à haute tension (technique DEHT ou simplement DEHT par la suite). Cette technique était initialement destinée à des applications militaires ou scientifiques nécessitant de très fortes énergies.

La création de décharges électriques à haute tension nécessite une chambre de traitement et un générateur électrique qui peut être à forts courants (thyristors, IGBT, GTO, etc.) ou à haute tension (transformateurs à lignes, de Tesla, générateurs de Marx, etc.).

La chambre de traitement comprend des électrodes, dont les combinaisons les plus communément utilisées sont les combinaisons pointe-plan et pointe-pointe. Les électrodes sont entièrement ou partiellement immergées dans l'eau.

La matrice végétale est placée dans la chambre de traitement et est immergée. Le générateur électrique permet d'emmagasiner l'énergie électrique dans un ensemble de condensateurs ou d'inductance de stockage. L'existence d'une forte tension aux bornes des électrodes provoque un phénomène de claquage électrique et la création d'une décharge électrique entre les deux électrodes. Lorsqu'une décharge électrique est appliquée dans l'eau, comme c'est le cas ici, il se produit alors des ondes de chocs qui entrent en contact avec la matrice végétale. Cette dernière se fragmente alors en fonction du nombre d'impulsions injectées, libérant ainsi des biocomposés, dont font partie les polyphénols.

Cet état de l'art a permis de mettre en évidence certaines lacunes des procédés classiques d'extraction solide/liquide et a conduit vers la recherche de l'intensification de l'extraction. Tout d'abord, le procédé classique d'extraction solide/liquide est relativement long (entre et 3h et 20h). Une température élevée (supérieure à 50°C) est également nécessaire et résulte en un coût énergétique conséquent.

D'autre part, l'addition de solvants organiques ou de sulfites représentent à la fois une contrainte pour l'environnement mais limitent également les applications du produit final. Enfin, de manière générale, pour l'extraction d'alcool, d'acide tartrique ou éventuellement de polyphénols, il n'existe pas de procédé pour lequel les paramètres sont rationalisés et optimisés.

L'état de l'art connait aussi les documents suivants.

Le document Delsart et al ("Effet des champs électriques pulsés sur l'extraction des polyphénols du raisin", 20 juin 2010 (2010-06-20), XP002640420, Tbilisi, Georgie) décrit l'application de champs électrique sur du moût de raisin en cours de vinification, pour que les polyphénols soient libérés dans le mélange qui continue par la suite le processus de vinification.

Le document US 2008/279995 décrit un procédé de traitement électrique sur du moût de raison pour améliorer les qualités du vin issu de ce moût. Les molécules d'intérêt sont donc libérées dans le moût.

Le document Corrales et al ("Extraction of anthocyanins from grape by-products assisted by ultrasonics, high hydrostatic pressure or pulsed electric fields: A comparison", INNOVATIVE FOOD SCIENCE AND EMERGING TECHNOLOGIES, ELSEVIER, AMSTERDAM, NL, vol. 9, no. 1, 26 novembre 2007 (2007-11-26), pages 85-91) décrit quant à lui un procédé selon le préambule de la revendication 1.

Par conséquent, il apparait nécessaire d'améliorer le procédé d'extraction par un procédé d'intensification.

Présentation

L'invention vise donc à pallier ces inconvénients de l'état de la technique, afin d'augmenter l'efficacité d'extraction des molécules du marc de raisin ou de ses composés, tout en proposant un traitement de plus faible coût énergétique et en réduisant l'ajout de produits chimiques.

Dans une application particulière, l'invention vise à proposer un procédé d'extraction de polyphénols ayant un meilleur rendement d'extraction que les procédés conventionnels, tout en maintenant, voire améliorant, l'activité oxydante des polyphénols extraits grâce au procédé.

Pour cela, l'invention propose un procédé d'extraction de molécules d'intérêt à partir d'une matrice végétale constituée de tout ou partie de marc de raisin, tel que défini dans les revendications.

Description détaillée

Nous allons à présent décrire un procédé d'extraction de molécules conforme à l'invention à partir de marc de raisin, illustré par l'extraction de polyphénols.

Ce procédé peut être mis en oeuvre sur chaque élément solide constituant le marc, à savoir les pépins les pellicules les rafles, sur les lies ou encore sur les bourbes, ou une combinaison de ceux-ci. Le marc de raisin, les pépins, les pellicules, les rafles, les lies, les bourbes et les combinaisons de ceux-ci sont appelés par la suite matrice végétale.

La matière première servant à l'extraction peut être issue directement de la vinification, ou avoir été conservée préalablement pendant une durée prédéterminée (généralement jusqu'à un an ou plus selon les besoins) par surgélation ou par addition d'un antioxydant (tel que le dioxyde de soufre). On rappelle en effet que le marc de raisins n'est produit qu'une fois par an lors de la vendange, après pressurage

et se dégrade rapidement. Son utilisation durant toute l'année nécessite donc de pouvoir le stocker entre deux périodes de vendange.

Le marc de raisin peut donc notamment être conservé dans des sacs en plastiques hermétiques et opaques, pour le protéger contre la photo-oxydation, soit à environ 4°C, de préférence en présence de 0,01% de dioxyde de soufre, soit à - 31°C, après surgélation.

L'extraction des polyphénols est ensuite réalisée en trois étapes principales :

(1) un traitement électrique de la matière première ayant pour objectif d'endommager les membranes ou parois cellulaires afin de faciliter l'extraction ;
(2) une diffusion solide-liquide pendant laquelle les molécules migrent du marc de raisin vers un solvant hydro-alcoolique ; et
(3) une récupération des molécules ayant diffusé.

Le traitement électrique a pour objet d'intensifier l'extraction des polyphénols lors de l'étape subséquente de diffusion solide-liquide des polyphénols hors du marc de raisin vers un solvant. Il peut notamment être choisi parmi le traitement par décharges électriques de haute-tension (DEHT) ou le traitement par champs électriques pulsés (CEP).

L'ordre des étapes (1) et (2) n'est pas limitatif. En effet, la diffusion solide-liquide peut commencer avant le traitement électrique.

En variante, le traitement électrique peut débuter pendant la diffusion, après une première extraction dans un solvant hydro-alcoolique ou dans de l'eau. En effet, l'objectif de cette première extraction est de modifier la conductivité électrique du solvant par enrichissement en composés ioniques issus du marc afin d'améliorer l'application du champ électrique.

La matrice végétale peut en outre subir un pressage destiné à éliminer une partie de son eau de constitution afin de favoriser l'application du traitement électrique et de limiter les volumes de matières et de solvants mis en oeuvre.

Les polyphénols comprennent des dérivés phénoliques simples et les flavonoïdes.

Les dérivés phénoliques simples sont des dérivés de l'acide hydroxybenzoïque (acide gallique), de l'acide hydroxycinnamique (acide caféique, acide coumarique, acide férulique, stilbènes) ou des lignines.

Parmi les dérivés de l'acide hydroxycinnamique, il y a l'acide caféique, l'acide coumarique, l'acide férulique et les stilbènes (trans-resvératrol, cis-resvératrol, glucosides de trans- ou cis-resvératrol, trans-picéides, cis-picéides...).

Les flavonoïdes comprennent les anthocyanes, les flavanols et les flavanols.

Les principaux anthocyanes sont les dérivés glucosylés de cyanidine, de péonidine, de pétunidine, de delphinidine et de malvidine.

Les flavanols comprennent entre autres la catéchine, l'épicatéchine gallate, l'épicatéchine, les procyanidines, en particulier les procyanidines $B_1$ et $B_2$, et leurs polymères : poly(catéchine), poly(épicatéchine), poly(gallocatéchine), poly(épigallocatéchine), ou hétéropolymères.

Les polyphénols peuvent être utilisés dans les procédés de vinification pour améliorer les propriétés gustatives du vin.

Les flavonols comprennent entre autres le kaempférol et ses hétérosides, la quercétine et ses hétérosides et des hétérosides de l'isorhamnétine.

On entend dans la présente demande par le terme polyphénols soit un seul composé particulier cité ci-dessus, soit un mélange d'au moins deux composés cités ci-dessus.

*Traitement par DEHT*

Les DEHT intensifient l'extraction des polyphénols en déstructurant mécaniquement la matière première du marc. Plus précisément, le traitement par DEHT fait intervenir des ondes de pression, des processus de cavitation ainsi que des phénomènes de turbulence qui provoquent la fragmentation de la matière, favorisant ainsi le transfert de composés de l'intérieur de la cellule vers l'extérieur.

On comprend par haute tension des tensions suffisantes pour obtenir des décharges électriques, avantageusement supérieures à 20 kV, par exemple, 50 kV pour des électrodes point-plan séparées de 5 mm.

Le traitement par DEHT peut aussi bien être réalisé à l'échelle laboratoire (par exemple dans une enceinte de traitement de 1 L), qu'à l'échelle semi-pilote (par exemple dans une enceinte de traitement de 35 L) ou qu'à l'échelle industrielle en utilisant une cellule de traitement en continu dans laquelle circule le produit à traiter, comme par exemple un tube d'un mètre de long et de quelques centimètres de diamètre qui permet de traiter plusieurs tonnes par heure de matrice végétale, et pouvant aller jusqu'à 40 tonnes par heure (les électrodes étant alors placées le long du trajet du flux).

Un exemple de dispositif d'application de DEHT comprend notamment un générateur de haute tension relié à une chambre de traitement.

La chambre de traitement comporte deux électrodes entre lesquelles est introduit le marc de raisin dilué dans un solvant, tel que de l'eau ou un mélange hydro-alcoolique. Les électrodes sont généralement en acier inoxydable ou en aluminium, et comprennent une électrode pointe (typiquement de 10 mm de diamètre) reliée au générateur et une électrode plane (typiquement de 120 mm de diamètre) reliée à la masse. La distance entre les électrodes est comprise entre 2 et 10 mm, et est de préférence de l'ordre de 5 mm. En effet, à cette distance, le temps de latence avant le claquage électrique est réduit, limitant ainsi les pertes d'énergie.

On notera cependant que la distance optimale interélectrode varie avec la forme des électrodes, la tension appliquée aux électrodes ainsi que les dimensions de la chambre de traitement.

Le générateur haute tension comporte quant à lui un condensateur adapté pour emmagasiner de l'énergie électrique puis la décharger dans la cellule de traitement par l'intermédiaire d'un éclateur afin de produire un claquage électrique dans l'eau et générer une décharge électrique.

Le traitement électrique consiste alors à appliquer un nombre déterminé n d'impulsions (*id est* de décharges électriques) au mélange de solide et de liquide constitué par le marc et l'eau.

Les paramètres agissant sur l'efficacité du traitement sont notamment :

- la température de traitement choisie entre 40°C et 70°C ;
- la durée *t* du traitement (proportionnelle au nombre d'impulsions)
  avec

$$t = n \; x \; t_i,$$

où :

   $n$ est le nombre d'impulsions, et
   $t_i$ est la durée d'une impulsion (s),

- le ratio solvant/marc de raisin, dit encore ratio liquide/solide, choisi préférentiellement à 5 ;
- la distance inter-électrodes ;
- la tension appliquée;
- l'énergie fournie; et
- la fréquence des impulsions.

Ces paramètres permettent en effet d'optimiser la perméabilisation de la structure cellulaire du marc.

A l'échelle du laboratoire, le générateur peut par exemple fournir une tension maximale de 40 kV pour un courant maximal de 10 kA et générer des les impulsions d'une durée d'environ 10 μs à une fréquence de l'ordre de 0,5 Hz. L'énergie moyenne d'une impulsion électrique, fournie par le générateur, est alors de 160 J par impulsion.

A l'échelle semi-pilote, le générateur peut par exemple fournir une tension maximale de 40 kV pour un courant maximal de 30 kA et générer des les impulsions d'une durée d'environ 100 $\mu$s à une fréquence de l'ordre de 0,5 Hz. Les caractéristiques du traitement électrique (comme l'énergie moyenne d'une impulsion électrique) sont toutefois plus modulables que dans le cas du générateur laboratoire. Par exemple, à faible énergie, la décharge d'un condensateur de 200 nF permet de fournir une énergie moyenne de 160 J par impulsion, tandis qu'à forte énergie, la décharge d'un condensateur de 5 $\mu$F permet de fournir une énergie moyenne de 4000 J par impulsion.

L'énergie de traitement totale massique (par rapport au poids du marc de raisin traité) des DEHT est comprise entre 70 et 90 kJ/kg, de préférence 80 kJ/kg.

A l'échelle industrielle, les paramètres sont identiques à l'exception de la distance entre les électrodes qui peut être plus grande. Par exemple, dans le cas d'un montage coaxial des électrodes (dans lequel une première électrode s'étend parallèlement à l'axe de révolution du tube de traitement (typiquement selon cet axe), tandis que la deuxième électrode s'étend coaxialement à la première électrode, de sorte que le flux de produit passe entre les deux électrodes) dans le tube de traitement, la distance inter électrodes est de préférence de l'ordre du rayon du tube, par exemple 1,27 cm. En revanche, dans le cas d'un montage colinéaire des électrodes (dans lequel la cathode et l'anode sont sensiblement alignées et s'alternent le long du tube), la distance optimale de la configuration batch peut être conservée et est alors de l'ordre de 5 mm entre la cathode et l'anode le long du tube de traitement.

*Traitement par CEP*

Dans le cas du traitement par CEP, l'extraction des polyphénols est principalement intensifiée par électroporation des membranes cellulaires du marc de raisin. Ce traitement peut à la fois être appliqué sur des quantités de matrice végétale relativement faibles (de l'ordre de 1 à 10 g de matrice végétale) ou des quantités plus élevées (de l'ordre de 100 à 500 g).

Il est en particulier possible d'appliquer un traitement par CEP à faible intensité (à l'échelle laboratoire, avec 0,1 - 1,3 kV/cm), ou à forte intensité (à l'échelle semi-pilote ou à l'échelle industrielle, avec 0,5 - 20 kV/cm).

Dans le cas d'un traitement à faible intensité, le dispositif expérimental est constitué d'une cellule de traitement de CEP de faible volume (quelques cm$^3$) et reliée à un générateur de CEP.

Le temps total de traitement par CEP (*tCEP*, s) est défini par la durée de l'impulsion (*ti*, s) et le nombre total d'impulsions (*N$_{tot}$*). Ce dernier dépend du nombre de trains (*N*) et du nombre d'impulsions par train (*n*).

L'ensemble des paramètres de traitement du générateur peuvent être régulés par un logiciel de contrôle. Par exemple, le générateur peut fournir une tension maximale de 400 V pour un courant maximal de 40 A et générer des impulsions d'une durée comprise entre environ 10 et 10 000 $\mu$s. Le générateur peut alors fournir entre 1 et 1000 trains d'impulsions comprenant chacun 1 à 10 000 impulsions avec un temps de repos entre chaque train compris entre 1 et 3600 s.

Étant donné que l'intensité du champ électrique (*E*, V/cm) est définie par le rapport de la tension appliquée (*U,* V) et la distance inter-électrodes (*d*, cm), $E = \dfrac{U}{d}$ avec ce dispositif expérimental, pour une distance inter-électrode *d* de 3 mm, il est alors possible d'atteindre une intensité maximale d'environ 1,3 kV/cm.

De manière générale, l'intensité choisie est supérieure à 0,5 kV/cm.

Dans le cas d'un traitement de forte intensité et selon la nature de la matrice végétale (marc, pépins, etc.), l'intensité du champ électrique nécessaire peut être assez élevée, comme par exemple pour les pépins de raisins non broyés. Au maximum, pour les pépins de raisin, l'intensité du champ est typiquement choisie entre 15 et 25 kV/cm et de préférence 20 kV/cm.

Il est possible d'utiliser le même générateur et la même chambre de traitement que pour le traitement à faible intensité mis en oeuvre pour la génération des DEHT à l'échelle laboratoire, en utilisant par exemple deux électrodes planes parallèles en acier inoxydable à la place des électrodes pointe et plane. La distance entre les électrodes peut également varier de 2 à 10 mm, soit une intensité de CEP correspondante de 4 à 20 kV/cm.

Les principaux paramètres opératoires pouvant agir sur l'efficacité du traitement sont les suivants :

- le solvant d'extraction (eau seule, mélange eau/alcool, alcool seul) ;
- la température du traitement choisie entre 40°C et 70°C, de préférence 50°C ;
- la durée du traitement (proportionnelle au nombre d'impulsions), et
- l'intensité du champ électrique (définie par la distance inter-électrodes);
- la fréquence des impulsions;
- la forme des impulsions; et
- la polarité des impulsions (unipolaire ou bipolaire).

*Diffusion hydro-alcoolique*

Afin d'optimiser l'extraction des molécules, préférentiellement des polyphénols, le mélange traité subit l'étape de diffusion en combinaison avec le traitement électrique par DEHT ou CEP. L'étape de diffusion peut commencer avant le traitement électrique et se terminer après ce traitement électrique ou commencer immédiatement après le traitement électrique.

Pendant la diffusion, il est préférable de ne pas dépasser la température de 60°C afin de limiter la dégradation thermique des polyphénols.

De plus, à faible température (20°C), la diffusion peut être assez longue (jusqu'à 4 h) tandis qu'à une température plus élevée (entre 40°C et 60°C) la diffusion est comprise entre 1 heure et 1 heure 30. Typiquement, une élévation de la température de diffusion de 20°C à 60°C permet d'augmenter la teneur du solvant en polyphénols extraits de 33 % et l'activité antioxydante de 48 % au bout de 60 min d'extraction.

A l'échelle industrielle, la température de diffusion peut par exemple être comprise entre 50°C et 60°C.

La diffusion est réalisée dans un solvant hydro-alcoolique ou dans un solvant comprenant de l'acétate d'éthyle. Si lors du traitement électrique (par DEHT ou CEP) le marc de raisin est immergé dans un solvant hydro-alcoolique ou un solvant comprenant l'acétate d'éthyle, ce solvant peut être le même pour le traitement électrique et la diffusion.

Le solvant hydro-alcoolique est un mélange d'eau et d'alcool avec un taux d'alcool variant de 25 à 50% en poids. L'eau peut être de l'eau distillée ou de l'eau du robinet. L'alcool peut être du méthanol, de l'éthanol. Néanmoins, l'éthanol est préférable pour une utilisation ultérieure des molécules extraites dans le domaine alimentaire.

Dans le cas où l'acétate d'éthyle est utilisé, celui-ci peut être utilisé en mélange avec l'éthanol ou le méthanol. Le mélange acétate d'éthyle / alcool comprend entre 5 % et 30 % d'acétate d'éthyle. Il est également possible de mettre en oeuvre un mélange ternaire acétate d'éthyle / alcool / eau, de préférence un mélange ternaire acétate d'éthyle / éthanol / eau, dans des proportions volumiques comprises notamment entre 4 / 1 / 4 et 10 / 1 / 10.

L'alcool ou l'acétate d'éthyle est introduit dans l'eau avant, pendant ou suite aux prétraitements électriques, mais préalablement à la diffusion.

Dans le cas où le solvant est un solvant hydro-alcoolique, la quantité de polyphénols extraits augmente avec la teneur en alcool, puisque l'éthanol, qui est un solvant polaire, favorise l'extraction des polyphénols en raison de leur plus grande solubilité dans ce solvant que dans l'eau seule. Par ailleurs, il désorganise la structure externe des membranes cellulaires, permettant ainsi l'extraction des polyphénols situés dans les membranes ou à l'intérieur des cellules.

La quantité de solvant par rapport au marc de raisin est ajustée en respectant un ratio liquide/solide en poids compris entre 1 et 20, de préférence entre 4 et 10 dans le cas d'une diffusion réalisée en un batch d'une heure. En effet, plus le ratio augmente, plus la quantité en polyphénols extraits est élevée. Un palier est toutefois atteint à partir d'un ratio liquide/solide d'environ 5, la saturation du solvant (eau) se produisant pour les ratios inférieurs.

Par exemple, suite à l'un ou l'autre des prétraitements électriques, la diffusion dans un solvant comprenant 30% d'éthanol et 70% d'eau permet d'obtenir le meilleur rendement d'extraction, en le multipliant par un facteur 3 en comparaison avec un solvant composé uniquement d'eau (2,8 ± 0,4g GAE (Gallic Acid Equivalent, pour équivalent en acide gallique) par 100 g de matière sèche pour le traitement par DEHT et 7.5 ± 0.4 g GAE pour le traitement par CEP) et la meilleure activité antioxydante des extraits (66,8 ± 3,1 g TEAC par kilogramme de masse solide pour le traitement par DEHT).

Selon une forme de réalisation préférée, durant l'étape de diffusion, le marc prétraité électriquement est placé dans un solvant comprenant 30% d'éthanol et 70% d'eau avec un ratio liquide/solide de l'ordre de 5. Après une heure de diffusion à 30°C ou à 50°C, le solvant comprend alors des polyphénols sous forme dissoute ou en suspension colloïdale.

L'eau utilisée peut être de l'eau distillée, purifiée, ou simplement de l'eau du robinet.

On notera toutefois que les polyphénols migrent progressivement du marc vers le solvant pendant les trente premières minutes d'extraction, puis atteignent un palier entre 30 et 60 minutes au cours duquel la cinétique d'extraction est considérablement ralentie.

Le pH de la solution est avantageusement acide. Un pH inférieur à 6 permet de limiter la dégradation des polyphénols. Un pH à 4, qui est le pH naturel du marc de raisin, permet de protéger les anthocyanes. Le cas échéant, le pH peut être modifié par l'ajout d'un acide, de préférence alimentaire.

Après la diffusion, le solvant contenant les polyphénols sous forme dissoute ou en suspension colloïdale est séparé du marc de raisin, par exemple par filtrage.

Les extraits liquides de polyphénols sont ensuite séparés du solvant et autres extraits non recherchés par centrifugation puis transformés en poudre. Cette étape de pulvérisation permet d'une part d'augmenter la stabilité des polyphénols et d'autre part de proposer un produit sous une forme commercialisable.

Les extraits pouvant contenir des sucres et des protéines, selon l'application ultérieure choisie pour les polyphénols (pharmaceutique, cosmétique et/ou agro-alimentaire), il peut en outre être nécessaire de les purifier avant de les sécher, par exemple par extraction sur phase solide. Cette technique de purification est notamment fondée sur la distribution des composés entre une phase solide (adsorbant) et une phase liquide (échantillon) conformément aux techniques conventionnelles.

*Mise à l'échelle*

Dans ce qui suit, nous détaillerons les paramètres opératoires du traitement électrique devant être appliqué afin d'intensifier l'extraction des polyphénols par des traitements électriques à l'échelle semi-pilote. Pour cela, nous allons plus particulièrement décrire le cas du traitement par DEHT. Néanmoins, ceci n'est aucunement limitatif et l'homme du métier saura appliquer l'enseignement qui suit au cas du traitement par CEP.

Le traitement par DEHT à l'échelle laboratoire peut être réalisé dans une enceinte contenant 50 g de marc de raisin et 250 g d'eau (soit une masse de matrice végétale totale de 300 g), *id est* selon un rapport liquide/solide de 5. Pour les essais semi-pilotes, en maintenant le rapport liquide/solide de 5, une masse de matrice végétale totale de 7 500 g est introduite dans une seconde enceinte.

Pour la mise à l'échelle, trois paramètres opératoires importants du traitement électrique sont l'énergie électrique d'une impulsion (kJ/impulsion), l'énergie de l'impulsion électrique par masse de matrice végétale traitée (kJ/kg/impulsion) et l'énergie de traitement totale massique (kJ/kg).

L'énergie électrique d'une impulsion est limitée par le condensateur qui compose le générateur.

L'énergie de l'impulsion électrique par masse de matrice végétale traitée quant à elle tient compte de la quantité de matière première. Pour les essais en laboratoire des exemples précédents, le générateur permet de délivrer une impulsion électrique de 0,16 kJ. Dans le cas des essais semi-pilotes, il est par exemple possible d'utiliser deux condensateurs différents dans un générateur pilote afin de fournir une impulsion électrique de 0,16 kJ ou de 4 kJ. Une fois l'énergie de l'impulsion fixée, il est alors possible de déterminer l'effet de la durée du traitement appliqué à la matrice végétale en faisant varier le nombre d'impulsions.

Enfin, l'énergie de traitement totale tient compte à la fois du nombre d'impulsions et de la quantité de matrice végétale totale.

Suite au traitement par DEHT, une diffusion aqueuse discontinue est réalisée par exemple avec un batch d'une heure. A l'échelle industrielle, on peut aller jusqu'à 14 batchs avec un flux de solvant continu dans le tube de traitement, ce qui permet de se rapprocher d'une diffusion aqueuse continue. Les rendements d'extraction obtenus à l'échelle laboratoire et à l'échelle semi-pilote peuvent alors être comparés en termes de taux de polyphénols extraits et d'activité oxydante (dont la mesure permet de vérifier que les polyphénols extraits après DEHT restent fonctionnels notamment par rapport à leur capacité à piéger des oxydants).

Lorsqu'une énergie électrique d'une impulsion de 0,16 kJ/impulsion est appliquée, aucune amélioration de l'extraction des polyphénols par rapport à une diffusion simple n'est observée à l'échelle semi-pilote.

Il n'en est en revanche pas de même lorsque l'on conserve l'énergie par masse de matrice végétale traitée entre les deux échelles. Dans le cas de l'échelle laboratoire, le rapport entre l'énergie fournie et la masse de matrice végétale totale est de 0,53 kJ/kg/impulsion.

Lorsque l'on applique un traitement d'énergie totale massique de 53 kJ/kg (par exemple avec 100 impulsions de 0,53 kJ/kg/impulsion) à l'échelle laboratoire et à l'échelle semi-pilote, la teneur en polyphénols extraits à l'échelle semi-pilote ne représente que 38% de celle obtenue à l'échelle laboratoire. Néanmoins, la conservation de l'énergie par masse de matrice végétale traitée permet toutefois d'améliorer l'extraction des polyphénols par rapport à une diffusion simple (témoin). Une même tendance est retrouvée concernant l'activité antioxydante des extraits liquides de polyphénols.

Par ailleurs, il est également préférable de tenir compte de la géométrie (dimensions et forme) des chambres de traitement lorsque l'on modifie l'échelle des essais (notamment lorsque l'on passe de l'échelle laboratoire à l'échelle semi-pilote ou à l'échelle industrielle). En effet, selon la forme de la chambre de traitement, les décharges électriques sont réparties différemment au sein de la chambre de traitement sur une même matrice végétale traitée dans la mesure où elles produisent des ondes de choc de pression élevée (jusqu'à 1000 MPa) qui sont responsables des turbulences et de l'agitation du liquide au sein de la chambre.

Typiquement, si on regarde le rapport hauteur/diamètre des chambres de traitement, des zones mortes à l'intérieur de chambres de traitement à rapport hauteur/diamètre plus petit peuvent être de taille plus importante, alors que l'agitation par propagation des ondes de choc peut être réduite dans des chambres de traitement à rapport hauteur/diamètre plus grand. C'est en fait le champ de pression au sein de la chambre de traitement, qui résulte de l'énergie de la décharge par unité de volume et de la distance entre la décharge électrique et les parois de la chambre qui est déterminant. Des niveaux de pression supérieure à 100 bars sont nécessaires pour qu'il y ait une augmentation significative de l'extraction des polyphénols.

Par conséquent, l'énergie requise pour que le traitement par DEHT ait un effet sur les rendements d'extraction dépend bien de la géométrie de la chambre de traitement, et une énergie minimale fonction de la configuration de la chambre de traitement est nécessaire. En deçà, les décharges électriques ne semblent avoir que peu d'effet sur l'extraction des polyphénols.

Il est également préférable de faire varier l'énergie de traitement totale en jouant sur le nombre d'impulsions envoyées sur la matrice végétale (marc, pépins, lies, etc.). En effet, plus l'énergie totale massique est grande, meilleur est le rendement d'extraction des polyphénols. Plus précisément, l'activité antioxydante et le rendement d'extraction augmente linéairement avec le nombre d'impulsions déchargées dans la matrice végétale. Il existe toutefois un optimum d'extraction : le rendement de polyphénols augmente puis diminue au-delà d'une certaine valeur d'énergie de traitement. Pour les essais laboratoires, l'énergie optimale totale massique est de 100-160 kJ/kg. Pour les essais semi-pilotes, elle est de 400-550 kJ/kg. Une énergie de traitement plus élevée est donc nécessaire à l'échelle semi-pilote pour obtenir des résultats équivalents à ceux obtenus à l'échelle laboratoire.

Typiquement, d'excellents résultats sont obtenus pour 1000 impulsions, soit un traitement d'énergie totale de 533 kJ/kg : la concentration en polyphénols est alors 7 fois plus élevée par rapport à un essai témoin sans traitement électrique, tandis que l'activité antioxydante des extraits est augmentée par un facteur 5, et les taux d'extraction ($\approx$ 200 mg GAE/L) obtenus à l'échelle semi-pilote à 160 kJ/kg sont alors semblables à ceux déterminés à l'échelle laboratoire à 53 kJ/kg en conservant l'énergie massique (kJ/kg) et en faisant varier l'énergie par impulsion (J).

Par ailleurs, selon le type de matrice végétale, l'énergie nécessaire est plus ou moins élevée. Par exemple, les rafles, partie ligneuse ramifiée, semblent être les plus résistantes aux décharges car les teneurs en polyphénols maximales sont obtenues avec les plus fortes valeurs d'énergie (400 kJ/kg à l'échelle semi-pilote, 213 kJ/kg à l'échelle laboratoire). Au contraire, les pellicules semblent être plus sensibles ; une énergie de 133 kJ/kg suffit à l'échelle semi-pilote pour extraire environ 400 mg GAE/L. Une quantité de polyphénols similaire est obtenue à l'échelle laboratoire après un traitement de 53 kJ/kg.

Par conséquent, même si les tendances sont similaires, l'extraction à l'échelle semi-pilote nécessite une énergie totale de traitement globalement plus élevée que celle appliquée à l'échelle laboratoire. Les conditions de traitement ne semblent donc pas équivalentes dans les chambres de traitement. Le champ de pression générée par la décharge électrique est différent dans les deux systèmes de traitement. La caractérisation physique de la décharge électrique permettrait alors d'étudier le rôle du champ de pression sur la déstructuration cellulaire et par conséquent sur l'extraction des polyphénols.

*Résultats*

Nous allons à présent comparer les performances générales du procédé d'extraction conforme à la présente invention avec les procédés conventionnels qui ne comportent pas d'étape préliminaire d'intensification de l'extraction et/ou mettant en oeuvre un solvant de diffusion ne contenant que de l'eau ou que de l'alcool.

On rappelle tout d'abord que les prétraitements par DEHT et par CEP agissent différemment sur la matrice végétale traitée, nécessitent des paramètres opératoires différents (fonction généralement du type de matrice végétale, à savoir du marc, des pépins, etc.) et donnent au final des rendements différents. L'adaptation des paramètres au type de matrice végétale traitée (marcs, pépins, etc.) est cependant de l'ordre des capacités de l'homme du métier et ne seront pas systématiquement détaillés dans la suite de cette description.

En premier lieu, nous détaillerons les performances dans le cas de la mise en oeuvre d'un traitement par DEHT. Des performances comparables ont néanmoins également été obtenues lors de la mise en oeuvre du traitement par CEP.

Ici, un prétraitement électrique par DEHT au cours duquel quatre-vingts impulsions d'une durée effective totale (c'est-à-dire la durée cumulée pendant laquelle la solution a été soumise à une décharge, sans compter les pauses entre deux impulsions ni le temps de diffusion) de 0,8 ms suivi d'une diffusion discontinue par batch (avec un batch d'une durée d'une heure) a été appliqué à du marc de raisin.

Au bout d'une heure d'extraction à 20°C, les rendements en solutés totaux sont de l'ordre de 70% avec prétraitement électrique par DEHT, contre 22 $\pm$ 2 % en l'absence de DEHT (mais avec diffusion dans un solvant hydro-alcoolique). On remarquera par ailleurs qu'après seulement une heure d'extraction avec DEHT, la teneur en polyphénols est 30% supérieure à celle obtenue après quatre heures de diffusion sans DEHT.

L'extraction de polyphénols est encore améliorée en augmentant la température à 60°C. L'augmentation de la température permet d'augmenter la fluidité de la membrane plasmique et de favoriser la création de pores. Ainsi, les performances d'une diffusion avec DEHT à 20°C sont similaires à celles d'une diffusion simple à 40°C sans DEHT. La même tendance est observée pour une diffusion avec DEHT à 40°C et une diffusion simple à 60°C.

L'effet du prétraitement électrique, qu'il soit réalisé par DEHT ou par CEP, est donc bien de réduire la durée et la température de l'étape de diffusion (et donc le coût énergétique) tout en améliorant les performances d'extraction de l'étape de diffusion.

A l'échelle laboratoire, pour un traitement de pellicules de raisin par CEP, une intensité de champ électrique de 1300 V/cm appliquée aux pellicules pendant une durée de traitement effective d'une seconde permet d'obtenir un taux de perméabilisation des membranes cellulaires maximal Pour un traitement par DEHT, l'application de 60 impulsions (d'une durée effective de 0,6 ms) est suffisante pour atteindre un palier d'extraction des solutés totaux.

Ainsi, le nombre d'impulsions nécessaire pour fragmenter les cellules des pellicules est moindre car les pellicules constituent une matrice végétale plus fragile que les marcs entiers.

A l'échelle semi-pilote, le temps de traitement effectif doit en revanche être augmenté pour obtenir les mêmes résultats. A l'échelle industrielle, le temps de réaction est en revanche proche de celui de l'échelle semi-pilote soit environ 1 ms.

Les prétraitements par CEP ou DEHT des pellicules ont également un effet positif sur l'extraction des polyphénols et des solutés totaux. En effet, la quantité de polyphénols extraits est significativement plus importante immédiatement après DEHT (hausse d'un facteur 4 par rapport à une diffusion simple) puis atteint un palier d'extraction, tandis qu'après CEP, l'extraction des polyphénols est augmentée d'un facteur 2.

Par ailleurs, les vitesses d'extraction initiales sont différentes dans le cas d'une diffusion conventionnelle (sais prétraitement d'intensification) et dans le cas des diffusions assistées par CEP et DEHT. Les quantités de polyphénols finales dans le solvant restent cependant équivalentes après environ 3h d'extraction (les valeurs finales pour les diffusions assistées étant toutefois légèrement supérieures).

Les composés principaux des polyphénols obtenus, identifiables par exemple par HPLC (High Performance Liquid Chromatogaphy, pour chromatographie en phase liquide à haute performance), sont des flavanols (catéchine et épicatéchine) et des flavonols (quercétine-3-O-glucoside et kaempférol-3-O-glucoside). De la diffusion assistée par DEHT résulte une extraction de catéchine et d'épicatéchine plus efficace que d'une diffusion simple ou d'une diffusion assistée par CEP. Cette différence peut être attribuée à la fragmentation tissulaire provoquée par les DEHT alors que les CEP ne déstructurent pas les cellules végétales.

La température de diffusion peut également avoir un impact sur les performances d'extraction à partir des pellicules. En effet, le dommage causé aux cellules (et donc l'extraction des polyphénols) induit par les traitements électriques est d'autant plus prononcé que la température est élevée.

La plus forte teneur en polyphénols est obtenue pour une diffusion assistée par DEHT à 60°C ($C$=32 $\mu$mol GAE/g MS), tandis que l'extraction assistée par DEHT à 20°C est aussi efficace qu'une diffusion simple (sans prétraitement) à 40°C.

Il existe une énergie totale massique optimale pour l'extraction des polyphénols avec un traitement électrique par DEHT qui se situe à 80-100 kJ/kg avec l'application d'impulsions de 160 J pendant 10 microsecondes. Le taux d'extraction des polyphénols totaux est alors de 1,37 $\pm$ 0,11 g GAE pour 100 g de matière sèche avec une activité antioxydante correspondante de 23,02 $\pm$ 3,06 g TEAC (Trolox equivalent antioxidant capacity, pour capacité antioxydante équivalent au Trolox) par kilogramme de matière sèche. La même tendance a été observée pour les composés phénoliques individuels (catéchine, épicatéchine, quercétine-3-O-glucoside et kaempférol-3-O-glucoside). Au-delà de cette énergie dissipée dans la matrice végétale, la formation de radicaux libres et d'ozone lors des DEHT contribue à la dégradation des polyphénols extraits.

A l'échelle semi-pilote, cette énergie totale massique optimale est d'environ 400 kJ/kg.

Dans le cas du traitement électrique par CEP, l'optimum d'extraction a lieu lorsqu'une intensité de champ électrique de 20 kV/cm est appliquée au marc (ou tout autre composant, tel que les pépins, etc.) pendant 6 ms (soit un traitement de 318 kJ/kg), suivie d'une diffusion à une température de traitement de 50°C dans un solvant d'extraction contenant 30% d'éthanol pour 70% d'eau. Le taux d'extraction maximum des polyphénols totaux est alors de 9 g GAE pour 100 g de matière sèche et est atteint au bout d'environ 19 minutes. En comparaison, dans le cas du traitement par DEHT (réalisée pendant 1 ms à 40 kV dans un même solvant), une même teneur en polyphénols est atteinte après un temps de diffusion de 14 minutes.

Dans tous les cas, le prétraitement électrique combiné à la mise en oeuvre d'un solvant d'extraction hydroalcoolique permet de donc réduire la durée de l'étape de diffusion.

La mise en oeuvre des CEP présente l'avantage sur la mise en oeuvre des DEHT de préserver la structure de la matrice végétale solide : les CEP agissent par électroporation des membranes cellulaires sans fragmenter la matrice végétale, tandis que les DEHT endommagent membranes et parois cellulaires de la matrice végétale (les ondes de choc et les bulles de cavitation produites pendant le traitement entrent en collision avec la matrice végétale et le fragmentent plus ou moins selon l'intensité du traitement).

Il est par ailleurs important de noter que la combinaison de l'éthanol dans le solvant d'extraction avec le prétraitement électrique par CEP a pour effet d'améliorer encore l'électroporation des membranes cellulaires. En effet, l'éthanol affaiblit les membranes cellulaires, améliorant ainsi le traitement pas CEP qui forme alors des pores membranaires eux-mêmes améliorent la pénétration de l'éthanol dans les membranes et donc l'extraction de polyphénols.

Dans le cas où la matrice végétale est constituée de pépin, les diamètres des pépins traités par CEP sont semblables (environ 4000 $\mu$m) à ceux des pépins non traités, et de fines particules (poussières situées à la surface des pépins) d'environ 10-20 $\mu$m existent dans la suspension après diffusion simple et diffusion assistée par CEP. En comparaison, le traitement par DEHT réduit de vingt fois la taille des pépins (jusqu'à environ 200 $\mu$m de diamètre).

Par ailleurs, la séparation solide-liquide par centrifugation est plus rapide pour des suspensions traitées par CEP que celles traitées par DEHT, de sorte que la présence des débris de pépins rend une telle séparation plus longue dans le cas d'un prétraitement par DEHT.

En particulier pour le traitement DEHT, l'application des DEHT sur les marcs de raisin permet:

(1) d'augmenter jusqu'à 3,5 fois les rendements en solutés totaux, c'est-à-dire tous les composés ayant passés des pellicules au solvant, et jusqu'à 2,5 fois le taux de polyphénols;
(2) de réduire la température de diffusion (les rendements en solutés après extraction à 40°C sans DEHT étant les mêmes qu'après une extraction à 20°C avec DEHT) ;
(3) de réduire la durée de diffusion (après un temps effectif de DEHT de 0,8 ms, le rendement en solutés est de 50% alors qu'il est de seulement 25% après 60 min d'extraction sans DEHT).

Le prétraitement par décharges électriques améliore l'extraction des polyphénols, que ce soit à l'échelle laboratoire ou à l'échelle semi-pilote (qui permet ensuite d'envisager une éventuelle application des DEHT à l'échelle industrielle).

*Mode de conservation*

Concernant le mode de conservation du marc, l'addition de dioxyde de soufre n'a pas d'influence visible sur l'extraction des solutés totaux au cours de la diffusion avec ou sans DEHT. Au contraire, lorsque les marcs sont congelés puis décongelés, le rendement final en solutés passe de $27 \pm 2$ % (marcs frais) à $68 \pm 4$ % (marcs congelés) pour une diffusion simple. Avec un prétraitement par DEHT, le rendement d'extraction atteint un maximum de $88 \pm 4$ % après quatre heures de diffusion pour des marcs congelés. En ce qui concerne les polyphénols, ces deux modes de conservation influencent leur extraction avec un taux maximal de $0,69 \pm 0,07$% après quatre heures d'extraction avec DEHT à partir de marcs congelés.

Ainsi, en tant que mode de conservation, l'ajout de dioxyde de soufre est préférable car les résultats d'extraction des solutés et des polyphénols sont les plus proches de ceux obtenus avec des marcs frais. Dans le but d'augmenter les rendements d'extraction, la congélation est très efficace et agit en affectant la structure des cellules par la formation de cristaux de glaces. D'autre part, la congélation et le traitement par DEHT semblent agir sur des niveaux cellulaires différents expliquant la synergie observée entre ces deux traitements. Or, généralement, les prétraitements électriques (tels que les CEP) ne sont efficaces que sur des cellules végétales intactes d'où la nécessité de travailler sur du matériel végétal frais.

Le procédé décrit ci-dessus n'est pas limité à l'extraction des polyphénols. Il peut également être utilisé pour l'extraction d'autres molécules d'intérêt telles que les polysaccharides, les sucres, les protéines, les peptides, les acides organiques (acide malique, tartrique, etc.), les acides aminés, les acides gras, les lipides, les composés aromatiques, les composés de défense des baies, etc.

Le procédé n'est pas non plus limité à l'extraction de molécules d'intérêt à partir de marc de raisin, comme nous l'avons vu plus haut, mais peut également être appliqué à des lies, des bourbes, du thé, des fèves de cacao, des baies, des oléagineux tel que le lin, la pomme, ayant subi ou non une transformation (pressage, fermentation...).

Par ailleurs, les polyphénols obtenus selon un procédé conforme à l'invention sont de puissants antioxydants (en particulier les flavonols et les anthocyanes).

La teneur en pourcentages de matière sèche obtenue des polyphénols qui sont extraits est alors supérieure à 60, pour la catéchine, supérieure à 30 pour l'épicatéchine, inférieure à 5 pour la quercétine-3-o-glucoside, et inférieure à 1 pour la kaempférol-3-o-glucoside.

**Exemple 1- Traitement électrique par DEHT**

Le marc de raisin utilisé dans cet exemple est un résidu de raisins *Vitis vinifera* var. Pinot Meunier qui ont été pressés et non fermentés. Le marc de raisin est composé de graines, rafles et pellicules. Le taux de matière sèche du marc de raisin est de $22,0 \pm 0,1$% en poids.

La chambre de traitement utilisée de 1 L comprend deux électrodes en acier inoxydable, une de type pointe de 10 mm de diamètre et une autre de type plate de 35 mm de diamètre séparées de 5 mm.

Le traitement DEHT a été appliqué au marc de raisin avec les paramètres suivants :

- énergie totale massique : 80 kJ/kg ;
- ration solvant/marc de raisin : 5 ;
- température : 20°C ;
- temps total de diffusion : 60 min.

L'étape de diffusion est également conduite à une température de 20°C avec une agitation de 160 rpm.

Les résultats des rendements d'extraction sont résumés dans le tableau suivant pour le marc de raisin :

| (g GEA/100g de matière sèche) | 0% éthanol | 10% éthanol | 20% éthanol | 30% éthanol |
|---|---|---|---|---|
| Sans DEHT | 0,15 | non déterminé | 0,2 | 0,3 |
| Avec DEHT | 1,3 | 1,8 | 2,2 | 2,8 |

Les résultats des activités antioxydants sont résumés dans le tableau suivant pour le marc de raisin :

| (g TEAC/kg de matière sèche) | 0% éthanol | 10% éthanol | 20% éthanol | 30% éthanol |
|---|---|---|---|---|
| Sans DEHT | 2 | 4 | 3 | 3,5 |
| Avec DEHT | 25 | 35 | 40 | 68 |

## Exemple 2 - Traitement électrique par CEP

Des graines de raisin ont été obtenues au préalable à partir de marc de raisin industriel issu du pressage de raisins *Vitis vinifera* var. Pinot Meunier. Ces graines de raisin ont été séparées du marc de raisin et séchées industriellement par traitement d'air chaud pendant un temps de 15 à 20 min, puis récupérées. Le diamètre moyen des graines de raisin est de 4 mm. Le taux de matière sèche des graines est de 93 ± 1%.

La chambre de traitement utilisée de 1 L comprend deux électrodes planes de 95 cm d'aire et parallèles entre elles et séparées de 5 mm. Pour le traitement CEP, 50,0 g de graines de raisin ont été placées entre les deux électrodes. La chambre de traitement est ensuite remplie de solvant constitué de 30% en poids d'éthanol et de 70% en poids d'eau distillée.

Le traitement CEP a été appliqué à la matrice végétale avec les paramètres suivants :

- intensité de champ électrique : 20 kV/cm ;
- durée : 6 ms ;
- température : 50°C.

L'étape de diffusion est réalisée à une température de 50°C dans le même solvant.

Les résultats des rendements d'extraction sont résumés dans le tableau suivant :

| (g GEA/100g de matière sèche) | 30% éthanol |
|---|---|
| Sans CEP | 5,5 |
| Avec CEP | 7,5 |

## Exemple 3 - Profil des polyphénols avec un traitement électrique par DEHT

| Polyphénol | Concentration minimale dans une solution obtenue après diffusion (surnageant clarifié) |
|---|---|
| acide gallique | 3 mg/L |
| tryphtophane | 15 mg/L |
| catéchine | 100 mg/L |
| épicatéchine | 70 mg/L |
| quercétine-3-o-glucoside + glucuronide | 25 mg/L |
| kaempferol-3-o-glucoside | 5 mg/L |
| péonidine-3-o-glucoside | 20 mg/L |

(suite)

| Polyphénol | Concentration minimale dans une solution obtenue après diffusion (surnageant clarifié) |
|---|---|
| malvidine-3-o-glucoside | 100 mg/L |
| flavanols | 500 mg/L |

## Exemple 4 - Profil des polyphénols avec un traitement électrique par CEP

| Polyphénol | Concentration minimale dans une solution obtenue après diffusion (surnageant clarifié) |
|---|---|
| acide gallique | 0,5 mg/L |
| tryphtophane | 2 mg/L |
| catéchine | 6,5 mg/L |
| épicatéchine | 5,5 mg/L |
| maviding-3-o-glucoside | 20 mg/L |
| flavanols | 80 mg/L |

## Revendications

1. Procédé d'extraction de molécules d'intérêt à partir d'une matrice végétale constituée de tout ou partie de marc de raisin, le procédé comprenant les étapes suivantes :

    - traitement électrique de la matrice végétale par puissance pulsée ;
    - diffusion des molécules d'intérêt de la matrice végétale traitée dans un solvant hydro-alcoolique ou un solvant comprenant de l'acétate d'éthyle ; et
    - récupération des molécules d'intérêt ayant diffusé,

    le procédé étant **caractérisé en ce que** :

    la température de diffusion est inférieure à 60°C, et

    le traitement électrique est réalisé par application de champs électriques pulsés, l'intensité du champ électrique pulsé est comprise entre 15 et 25 kV.cm$^{-1}$, de préférence 20 kV.cm$^{-1}$, ou
    le traitement électrique est réalisé par application de décharges électriques de haute-tension, l'énergie de traitement totale massique des décharges électrique de haute-tension étant comprise entre 70 et 90 kJ.kg$^{-1}$, de préférence 80 kJ.kg$^{-1}$.

2. Procédé d'extraction selon la revendication 1, dans lequel les molécules d'intérêt sont des polyphénols.

3. Procédé selon l'une des revendications 1 à 2, dans lequel le solvant est hydro-alcoolique et comprend entre 25 et 50% d'alcool, de préférence de l'éthanol, ou un mélange d'alcool et d'acétate d'éthyle, le mélange comprenant entre 5% et 30% d'acétate d'éthyle et/ou de l'eau.

4. Procédé selon l'une des revendications 1 à 3, dans lequel la durée de l'étape de diffusion est d'au moins 10 minutes.

5. Procédé selon l'une des revendications 1 à 4, dans lequel les étapes de traitement électrique et de diffusion sont réalisées avec un flux de solvant continu dans un tube de traitement.

6. Procédé selon la revendication 5, dans lequel le traitement électrique est appliqué par l'intermédiaire d'électrodes coaxiales, la distance entre les électrodes étant de l'ordre du rayon du tube de traitement.

**7.** Procédé selon l'une des revendications 1 à 6, dans lequel le traitement électrique est appliqué par l'intermédiaire d'électrodes espacées d'environ 5 mm.

**8.** Procédé selon l'une des revendications 1 à 7, dans lequel le ratio solvant-marc de raisin utilisé lors de l'étape de diffusion est compris entre 4 et 6, de préférence 5.

**9.** Procédé selon l'une des revendications 1 à 8, dans lequel la température de diffusion est de 50°C.

**10.** Procédé selon l'une de revendications 1 à 9, comprenant en outre une étape de purification et/ou une étape de pulvérisation des molécules obtenues suite à l'étape de récupération.

**11.** Procédé selon l'une des revendications 1 à 10, dans lequel la matrice végétale comprend l'un au moins des éléments du groupe suivant : marc de raisin et ses constituants, lies, bourbes, thé, fèves de cacao, baies, oléagineux.

**Patentansprüche**

**1.** Verfahren zur Extraktion von interessierenden Molekülen aus einer pflanzlichen Matrix, die vollständig oder teilweise aus Trester besteht, wobei das Verfahren die folgenden Schritte umfasst:

- elektrische Behandlung der pflanzlichen Matrix durch eine pulsmodulierte Leistungszufuhr;
- Diffusion der interessierenden Moleküle der pflanzlichen Matrix, die in einem wässrig-alkoholischen Lösungsmittel oder in einem Ethylacetat enthaltenen Lösungsmittel behandelt wird; und
- Rückgewinnung der interessierenden Moleküle, die diffundiert haben,

wobei das Verfahren **dadurch gekennzeichnet ist, dass**:

die Diffusionstemperatur unter 60 °C beträgt, und
die elektrische Behandlung mit Anlegen von gepulsten elektrischen Feldern durchgeführt wird, wobei die gepulste elektrische Feldstärke zwischen 15 und 25 kV.cm$^{-1}$ liegt und vorzugsweise bei 20 kV.cm$^{-1}$, oder
die elektrische Behandlung mit Anlegen von elektrischen Hochspannungsentladungen durchgeführt wird, wobei die gesamte Massenbehandlungsenergie der elektrischen Hochspannungsentladungen zwischen 70 und 90 kJ.kg$^{-1}$, vorzugsweise bei 80 kJ.kg$^{-1}$ liegt.

**2.** Verfahren zur Extraktion nach Anspruch 1, wobei die interessierenden Moleküle Polyphenole sind.

**3.** Verfahren nach einem der Ansprüche 1 bis 2, wobei das Lösungsmittel wässrig-alkoholisch ist und zwischen 25 und 50 % Alkohol, vorzugsweise Ethylacetat, enthält, wobei die Mischung zwischen 5 % und 30 % Ethylacetat und/oder Wasser enthält.

**4.** Verfahren nach einem der Ansprüche 1 bis 3, wobei die Dauer des Diffusionsschritts mindestens 10 Minuten beträgt.

**5.** Verfahren nach einem der Ansprüche 1 bis 4, wobei die Schritte der elektrischen Behandlung und der Diffusion mit einem kontinuierlichen Lösungsmittelstrom in einem Behandlungsrohr durchgeführt werden.

**6.** Verfahren nach Anspruch 5, wobei die elektrische Behandlung vermittels koaxialer Elektroden durchgeführt wird, wobei der Abstand zwischen den Elektroden in der Größenordnung von dem Radius des Behandlungsrohrs liegt.

**7.** Verfahren nach einem der Ansprüche 1 bis 6, wobei die elektrische Behandlung vermittels Elektroden mit circa 5 mm Abstand durchgeführt wird.

**8.** Verfahren nach einem der Ansprüche 1 bis 7, wobei das beim Diffusionsschritt eingesetzte Verhältnis von Lösungsmittel-Trester zwischen 4 und 6 liegt, vorzugsweise bei 5.

**9.** Verfahren nach einem der Ansprüche 1 bis 8, wobei die Diffusionstemperatur 50 °C beträgt.

**10.** Verfahren nach einem der Ansprüche 1 bis 9, das ferner einen Reinigungsschritt und/oder einen Schritt mit Zerstäubung der beim Rückgewinnungsschritt erhaltenen Moleküle umfasst.

**11.** Verfahren nach einem der Ansprüche 1 bis 10, wobei die pflanzliche Matrix zumindest einen der Teile der folgenden Gruppe enthält: Trester und seine Bestandteile, Weintrub, Schlamm, Tee, Kakaobohnen, Beeren, Ölsaat.

**Claims**

**1.** A method for extracting molecules of interest from a plant matrix made up of all or part of grape pomace, the method comprising the following steps:

- electrical treatment of the plant matrix by pulsed power;
- diffusion of the molecules of interest of the treated plant matrix in a hydroalcoholic solvent or a solvent composed of ethyl acetate; and
- recovery of the molecules of interest having diffused,

the method being **characterized in that**:

the diffusion temperature is less than 60 °C, and
the electrical treatment is carried out by the application of pulsed electric fields, the intensity of the pulsed electric field is between 15 and 25 $kV\text{-}cm^{-1}$, preferably 20 $kV\text{-}cm^{-1}$, or
the electrical treatment is carried out by the application of high-voltage electrical discharges, the total specific energy of treatment of the high-voltage discharges being between 70 and 90 $kJ\text{-}kg^{-1}$, preferably 80 $kJ\ kg^{-1}$.

**2.** The extraction method according to claim 1, wherein the molecules of interest are polyphenols.

**3.** The method according to one of claims 1 to 2, wherein the solvent is hydroalcoholic and comprises between 25 % and 50 % of alcohol, preferably ethanol or a mixture of alcohol and ethyl acetate, the mixture comprising between 5 % and 30 % of ethyl acetate and/or water.

**4.** The method according to one of claims 1 to 3, wherein the duration of the diffusion step is of at least 10 minutes.

**5.** The method according to one of claims 1 to 4, wherein the electrical treatment and diffusion steps are carried out with a continuous flow of solvent in a treatment tube.

**6.** The method according to claim 5, wherein the electrical treatment is applied via coaxial electrodes, the distance between the electrodes being about the radius of the treatment tube.

**7.** The method according to one of claims 1 to 6, wherein the electrical treatment is applied via electrodes spaced apart by about 5 mm.

**8.** The method according to one of claims 1 to 7, wherein the solvent-grape pomace ratio used during the diffusion step is between 4 and 6, preferably 5.

**9.** The method according to one of claims 1 to 8, wherein the diffusion temperature is 50 °C.

**10.** The method according to one of claims 1 to 9, further comprising a step of purification and/or a step of pulverization of the molecules obtained following the recovery step.

**11.** The method according to one of claims 1 to 10, wherein the plant matrix comprises at least one element chosen from the group consisting of: grape pomace and constituents thereof, lees, must deposits, tea, cocoa beans, berries, oilseeds.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008279995 A

**Littérature non-brevet citée dans la description**

- **DELSART et al.** *Effet des champs électriques pulsés sur l'extraction des polyphénols du raisin,* 20 Juin 2010

- Extraction of anthocyanins from grape by-products assisted by ultrasonics, high hydrostatic pressure or pulsed electric fields: A comparison. **CORRALES et al.** INNOVATIVE FOOD SCIENCE AND EMERGING TECHNOLOGIES. ELSEVIER, 26 Novembre 2007, vol. 9, 85-91